# EUROPEAN PATENT APPLICATION

(11) **EP 4 230 054 A1**
(43) Date of publication of application: **23.08.2023**
(21) Application number: 22157764.6
(22) Date of filing: 21.02.2022
(51) Int. Cl.: A23J 3/14, A23J 3/16, A23J 3/22, A23P 30/20

(54) **EXTRUSION PROCESS FOR LIQUID PROTEIN CONCENTRATE OR ISOLATE**

(71) Applicant: Bühler AG, 9240 Uzwil (CH)
(72) Inventor: KERN, Christian, 70567 Stuttgart (DE); MITCHELL, William Robert, 8050 Zürich (CH)
(74) Representative: Hepp Wenger Ryffel AG

(57) **Abstract**

The present invention is related to a process for producing a protein-containing product, comprising the steps of preparing a slurry comprising a protein from a protein source, wherein said slurry preparation does not involve a spray-drying step, inserting said slurry from step a) into an extruder (2), or into a pre-conditioner from which the slurry is transferred into an extruder (2), and performing an extrusion so as to obtain said protein-containing product. The present invention is furthermore related to a system (1) for performing said process.

## Description

The present invention is related to a process for producing a protein-containing product, preferably a product that imitates the properties of meat, poultry, fish, seafood, and products derived therefrom. The present invention is also related to a system for performing such a process.

In the field of producing food products, the use of protein materials, preferably from vegetable sources, has become increasingly important. Typically, raw materials (for example soybeans, yellow pea, etc.) are treated in order to extract the proteins and purify them. The thus obtained protein materials are usually packaged in their final form intended for storage and/or shipment as a spray-dried powder. These powders can then be sold to various customers to be rehydrated in water with other ingredients in an extruder, in order to produce the final product.

However, the drying process itself is extremely costly and disadvantageous in terms of CO₂ emissions. The energy consumption by the drying process is rather high to remove water from the proteins. This is commercially disadvantageous, particularly since the obtained spray-dried powders will typically be rehydrated shortly afterwards anyway for further processing into a protein-containing product.

Moreover, the drying process itself involves high temperatures which may degrade the quality of the proteins themselves - in terms of nutritional, taste and functional quality.

Spray dryers themselves require enormous infrastructure, sometimes with large spray drying towers requiring their own multi-story buildings. There is also a high risk of explosion when dealing with spray dryers, particularly if the appropriate safety measures are not respected. Spray-dry towers have thus to meet strict safety standards.

In addition, spray-drying involves the risk of damaging the treated protein material, limiting their functionality in a subsequent texturization process (e.g. extrusion, shear cell technology, and the like).

It was the problem underlying the present invention to overcome the above problems and to provide a process for producing a protein-containing product that is improved over priori art processes with respect to associated costs, CO₂ emissions and operational risks.

The above problem has been solved by the process of the present invention, as defined in the claims.

In detail, the present invention is related to a process for producing a protein-containing product, comprising the steps
a) preparing a slurry comprising a protein from a protein source, wherein said slurry preparation does not involve a spray-drying step,
b) inserting said slurry from step a) into an extruder, or into a pre-conditioner from which the slurry is transferred into an extruder,
c) performing an extrusion process so as to obtain said protein-containing product.

It has been found that a protein-containing product, preferably a product that imitates the properties of meat, poultry, fish, seafood, and products derived therefrom, can be prepared directly from a slurry comprising a protein from a protein source, thus essentially avoiding the necessity of any spray-drying step during the production process. For certain embodiments, it might be preferred to adjust the slurry composition to be used in the process of the present invention by adding a small amount of dried powder, which may have undergone spray-drying. But even in those embodiments, the necessity of any spray-drying step can be largely reduced or even completely avoided.

In step a) of the process of the present invention, a slurry comprising a protein from a protein source is prepared.

According to the present invention, the term "protein source" refers to any naturally occurring protein source, in particular organisms or parts thereof that comprise at least one protein selected from the group consisting of legume based protein, cereal based protein, microalgae, a fermented biomass comprising an algae based protein or a mycoprotein or an ingredient produced by precision fermentation, seed and/or nut-based protein, or combinations thereof, for example, plant proteins selected from the group consisting of quinoa protein, buckwheat protein, millet protein, oat protein, rice protein, hemp protein, peanut protein, almond protein, cashew protein, coconut protein, lentil protein, water lentil protein, soy protein, faba bean protein, pea protein, chickpea protein, lupin protein, canola protein, sunflower protein, pumkin seed protein, chia seed protein, watermelon seed protein, flax seed protein, potato protein, microalgae protein, and combinations thereof. Preferred protein sources are pea protein and soy protein.

Said protein source is processed in a conventional way. Typically, a part of a respective organism, such as a whole seed, is cleaned, dried, cracked and/or dehulled, whatever is appropriate.

In the case of oilseed processing, the thus obtained dehulled seed may be subjected to steps of separating components such as vegetable oil, for example a lipid separation by pressing or a solvent lipid extraction step, and of comminuting the thus purified material, for example by a milling step.

In the case of pulse processing, only a step of comminuting the thus purified material, for example by a milling step, may be necessary.

The thus obtained protein material may be processed into a protein concentrate or a protein isolate, preferably a plant protein isolate or a plant protein concentrate.

Protein isolates are protein enriched fractions in which the protein content is as high as 80 or more wt.-%, based on the entire amount of the isolate. Protein isolates may be obtained from the material processed as described above by a protein extraction step such as acid or alkali precipitation, membrane filtration, centrifugation, and concentration such as decantation.

Protein concentrates are protein enriched fractions, wherein the content of protein is not as high as in isolates. In a plant protein concentrate, the protein content is typically in the range of 50-70 wt.-%, based on the entire amount of the concentrate.

In any case, a slurry is obtained. According to the present invention, a slurry comprises a liquid protein concentrate, a liquid protein isolate, a suspension of solid particles such as protein material in a liquid, preferably water, an emulsion containing proteins and oils, and combinations thereof.

The above steps may be carried out in any device that is conventionally used for this purpose. Preferably, a process line comprising devices such as a dehulling and/or milling device, a decanting device, and a heating device may be used.

According to the present invention, it is important that the thus obtained slurry is not subjected to any spray-drying step, as normally would be conducted to obtain a dried powder for storage and shipment.

Rather, it was found that the slurry can be introduced as it is into an extruder, or in a preconditioner and then into an extruder, for further processing, wherein said procedure results in a protein-containing product, preferably a product that imitates the properties of meat, poultry, fish, seafood, and products derived therefrom, having desired properties.

The slurry to be introduced into an extruder may be a high-moisture slurry or a low-moisture slurry, wherein according to the present invention a high-moisture slurry is preferred.

According to the present invention, a high-moisture slurry is defined as a slurry having a moisture content, preferably water content, of at least 30 wt.-%, preferably 30-90 wt.-%, more preferably preferably 40-70 wt.-%, especially preferred 50-60 wt.-%, based on the entire weight of the slurry. Accordingly, the total solids content, preferably the protein content, of a high-moisture slurry is not more than 70 wt.-%, preferably 70-10 wt.-%, more preferably preferably 60-30 wt.-%, especially preferred 50-40 wt.-%, based on the entire weight of the slurry.

According to the present invention, a low-moisture slurry is defined as a slurry having a moisture content, preferably water content, in the range from 5-30 wt.-%, preferably 10-25 wt.-%, especially preferred 10-20 wt.-%, based on the entire weight of the slurry. Accordingly, the total solids content, preferably the protein content, of a low-moisture slurry is in the range from 95-70 wt.-%, preferably 90-75 wt.-%, especially preferred 90-80 wt.-%, based on the entire weight of the slurry.

In step b) of the process of the present invention, said slurry is inserted into an extruder. According to an alternative embodiment, the slurry may first be inserted into a pre-conditioner, for performing known pre-conditioning operation. From the pre-conditioner, the slurry is then transferred into the extruder.

In the embodiment where a high-moisture slurry is used, the slurry is preferably conveyed through a line, such as a tube, into the extruder or pre-conditioner. A slurry pump, for example a vacuum-assisted twin screw pump, and/or additional valves and/or detectors such as flow meters may be provided in these pipes or hoses.

In the embodiment where a low-moisture slurry is used, the slurry is preferably conveyed through a line, such as a tube, into the extruder or pre-conditioner. Preferably, a conveying unit such as a positive displacement pump, preferably a vacuum pump or a twin-screw pump, is provided in said line so as to allow conveying of said more concentrated slurry.

Such conveying methods are known.

According to a preferred embodiment of the present invention, a flow-measuring and control system may be additionally provided in said conveying lines, preferably selected from the group consisting of a flow meter and a loss-in-weight feeder, and a combination thereof. Such systems are known. A loss-in-weight feeder operates for example by putting a buffer tank onto a load cell and determine a loss in weight (due to the amount of slurry flowing out of the buffer tank into the extruder or preconditioner). Preferably, at least two buffer tanks which are alternately operated may be provided, with one being emptied while the other being filled.

Preferably, said lines through which the slurry is conveyed to the extruder or pre-conditioner are directly connected to a device that is conventionally used for processing a protein source. Preferably, said lines through which the slurry is conveyed to the extruder or pre-conditioner are directly connected to a process line comprising devices such as a dehulling and/or milling device, a decanting device, and a heating device.

According to one embodiment of the present invention, said process line may also comprise a spray-drying unit. However, a by-pass valve is provided in said process line before said spray-drying unit. Said by-pass valve is connected to said extruder or preconditioner via a line discussed above. In this embodiment, it is possible to perform the process of the present invention without using an existing spray-drying unit, by removing the slurry from the process line before it can enter a spray-drying unit. An existing process line for preparing a dried protein powder can be simply retrofitted for the use according to the present invention by providing a by-pass valve before a spray-drying unit. Said by-pass valve may be provided at a position in the process line where a high-moisture slurry is present, e.g. before a centrifugation device. Alternatively, said by-pass valve may be provided at a position in the process line where a low-moisture slurry is present, e.g. directly before the spray-drying unit.

According to another embodiment of the present invention, tempering means, preferably heating means, may be provided to the conveying lines in order to ensure adequate flow of the slurry through the line and prevent any solidification or gel formation.

If necessary, the composition of the slurry (i.e. the ratio of moisture to total solids content) may be adjusted before the slurry is inserted into the extruder. The necessity for such a procedure may be determined by analysing the slurry.

Thus, according to a preferred embodiment of the present invention a monitoring step, preferably an in-line monitoring step, of the slurry is performed before the slurry is inserted into the extruder. Such monitoring steps are known in the art. For example, the slurry may be analysed by NIR (near infrared spectroscopy).

The monitoring step is preferably conducted in-line, for reasons of process economy. This is preferably done at or in the line through which the slurry is guided into the extruder. However, it is principally also possible to take a sample of the slurry and analyse the same off-line.

According to the result of such a monitoring step, before insertion into the extruder, the slurry is modified by adding a liquid, preferably water, and/or solid material, preferably a solid protein material.

Adjustment of the slurry composition may be necessary in instances where the slurry itself cannot be concentrated to a desired or required high total solids content without problems concerning the transport of the slurry into the extruder. In such a case, the total solids content may be adjusted immediately before the entry into the extruder by dosing a powder of the same material (e.g. soy protein concentrate slurry with some soy protein concentrate powder) into the slurry.

Said powder may have been prepared using a spray-drying step. However, according to this embodiment of the present invention only a small amount of such powder is required, if at all, so that also in that case a spray-drying step is mostly or completely bypassed.

According to a preferred embodiment of the present invention, 0-35%, preferably 5-25%, more preferably 10-20%, of the entire solids content of the final extruded product are dosed to the slurry in this step.

In addition or alternatively, a secondary protein source may be added in powder form at this stage, which may not be the same as the protein in the slurry. Said secondary protein source may be any of the proteins described above as protein source for the slurry. Preferably, also said secondary protein source is not produced by spray drying. By this way, a product containing a mixture of different proteins may be obtained, while keeping the overall carbon footprint of the used raw ingredients at a minimum.

Other minor ingredients that are easier to add via micro-dosing as powders, for example starches, flavours, colorants, may also be added to the slurry at this stage.

It may also be preferred to reduce the viscosity of the slurry at this stage by adding a liquid. Preferably, said liquid is water. However, also other food-approved liquids such as aqueous solutions comprising flavorant etc., for example bouillon, may be added.

The addition of liquid or powder to the slurry may be performed using conventional equipment. Since only a low amount of powder or liquid will typically be added at this stage, it is sufficient to use small-size and thus less expensive equipment for this purpose.

Subsequently, the slurry is subjected to an extrusion process in an extruder.

In an alternative embodiment, the slurry may first be led into a preconditioner. Pre-conditioners and preconditioning of protein materials are known in the art.

Extruders are generally known in the art. Reference is made, for example, to WO 2012/158023 A1 or to the extruders, in particular twin-screw extruders, from Bühler. Such extruders preferably have an L/D ratio (total length to screw diameter) in the range from 20 to 60, preferably 25 to 50, and particularly preferably 25 to 40. According to the invention, the extruders are preferably operated at 100 to 1000 rpm, more preferably at 300 to 500 rpm, and particularly preferably 350 to 400 rpm.

A suitable extruder comprises at least one unit for inserting material, here a slurry, in a first section of the extruder. The extruder can also have a water feed line and optionally a steam feed line.

The extruder comprises several sections, so-called barrel housings, in which material is processed and conveyed with the aid of at least one rotating screw. The screw elements used in the different barrel housings may be the same, but preferably are different in order to establish different processing conditions in the barrel housings.

According to a preferred embodiment of the present invention, the number of barrel housings in the extruder used for the process of the present invention may be reduced, as compared to conventional extruders. This is because the slurry will preferably enter the extruder in a heated state from an upstream process line. It is then not necessary to heat the slurry as much as would be necessary in conventional extrusion process. As a result, preferably 1-4 barrel housings, more preferably 2-3 barrel housings, may be omitted, as compared to a conventional extruder. Preferably, an extruder to be used according to the present invention comprises 4-5 barrel housings. This has the advantage of cost-savings and savings in space required for the extruder.

The housing of the extruder is preferably temperature controlled. The composition is kneaded under pressure (usually 1 to 60 bars, preferably 8 to 20 bars, and particularly preferably 10 to 15 bars) to form a homogeneous mixture. This usually involves an energy input of 10 to 120 Wh/kg, preferably 15 to 30 Wh/kg.

Preferably, in the extruder the slurry here is heated above the denaturation temperature of the protein, preferably to a temperature in the range from 80 to 180 °C, more preferably 120 to 160 °C, particularly preferably 130 to 150 °C, depending on the protein used. The housing of the extruder is preferably temperature controlled. The composition is kneaded under pressure (usually 1 to 60 bar, preferably 8 to 20 bar, and particularly preferably 10 to 15 bar) to form a homogeneous mixture. This usually involves an energy input of 10 to 120 Wh/kg, preferably 15 to 30 Wh/kg.

At the exit of the extruder, there may be provided a cooling die in order to bring the extrudate below the boiling point of water, that is, to a temperature below 100 °C under normal conditions. Cooling dies for extruders are sufficiently known. In this embodiment, the extrudate enters the cooling die through the exit of the extruder. According to a preferred embodiment of the present invention, the cooling die is a long cooling die, i.e. it has a length (defined as the length of a product flow channel through the die) that exceeds its width (defined as the longest dimension of a planar section vertically to the product flow channel).

Preferably, a distributor unit is provided between the extruder outlet and the cooling die. Said distributor unit provides for a uniform distribution of the extrudate exiting from the extruder outlet to the one or more extrudate flow channels in the cooling die. Especially preferred, said distributor unit is releasably arranged so as to be exchangeable.

Preferably, the distributor unit comprises a distribution element preferably designed as a cone. The design of said distribution element as a circular cone is particularly advantageous. It is also possible to design the distribution element as a truncated cone, in particular as a truncated circular cone. In the case of a cone or circular cone design, the distribution element can also be realized with a spherical section-shaped tip, whereby the flow behavior can be specifically influenced and adapted to the extrudate. The back pressure into the extruder can be influenced and the extent of shear of the product can be affected. The distribution element is preferably inserted in a recess of the distributor unit and is held in position in this recess by the pressure of the product flowing against the distribution element; interchangeability is particularly easy in this way.

In further preferred embodiment, an aperture can be arranged in the area of the end of the distributor unit facing away from the extruder and/or the end facing the extruder, with which the distribution channel(s) can be narrowed or constricted. Such apertures can in turn be used to specifically influence product properties, in particular the fibrousness; long and short fibers can be produced, but also amorphous or homogeneous structures. The thickness of the apertures in the main flow direction is in the range from 0.1 to 1.0 cm, preferably from 0.15 to 0.9 cm, particularly preferably from 0.2 to 0.8 cm.

The process according to the present invention can, in principle, be operated with a throughput in the range from 10 to 2000 kg/h. According to the present invention, the process is preferably performed with a throughput of 10 to 60 kg/h, preferably 20 to 50 kg/h and particularly preferably 30 to 40 kg/h, or alternatively with a throughput of 100 to 600 kg/h, preferably 300 to 600 kg/h and particularly preferably 400 to 550 kg/h, wherein the material in the extruder preferably has a residence time of at least 2 minutes, preferably at least 4 minutes.

The present invention is also related to a system for producing a protein-containing product, comprising
- at least one device for preparing a slurry comprising a protein from a protein source,
- an extruder,
- a unit for inserting a slurry into the extruder or into a pre-conditioner, characterized in that said unit is connected at one end to said at least one device for preparing a slurry comprising a protein from a protein source, preferably via a by-pass valve, or to a storage unit into which said slurry can be inserted from said at least one device for preparing a slurry, and on the other hand to said extruder or pre-conditioner.

The devices and units of said system have already been discussed above. The system is preferably provided for performing the method of the present invention described above.

Preferably, said unit for inserting a slurry into the extruder is a vacuum filling system, preferably a vacuum filing system comprising a screw pump. This is particularly suitable for conveying low-moisture slurries into an extruder or a preconditioner.

Preferably, the unit for inserting a slurry into the extruder comprises a flow-measuring and control system, preferably selected from the group consisting of a flow meter and a loss-in-weight feeder.

Preferably, the extruder comprises 4-5 barrel housings. As discussed above, since the slurry is typically inserted into the extruder in a heated state, less barrel housings are required for heating. This has the advantage of cost-savings and savings in space required for the extruder.

Preferably, the unit for inserting a slurry into the extruder comprises a dosing unit for adding a liquid, preferably water, and/or solid material, preferably protein material, to the slurry. Such dosing units are known. Since typically in the process of the present invention only small amounts of liquid or solid material are to be added to the slurry, it is sufficient to use a small-size and thus cheaper dosing unit for this purpose.

Preferably, the system furthermore comprises a monitoring unit, preferably a NIR (Near Infrared) monitoring unit. As discussed above, with such a monitoring unit the slurry can be analysed and it can be determined whether any liquid or solid material should be added.

Preferably, the at least one device for preparing a slurry comprising a protein from a protein source is a process line. Such a process line has been discussed above. Especially preferably, a bypass valve is provided in said process line before a spray-drying unit. Said by-pass valve is connected to said extruder or preconditioner via a unit for inserting a slurry and a line discussed above. In this embodiment, it is possible to perform the process of the present invention without using an existing spray-drying unit, by removing the slurry from the process line before it can enter a spray-drying unit. An existing process line for preparing a dried protein powder can be simply retrofitted for the use according to the present invention by providing a by-pass valve before a spray-drying unit. Said by-pass valve may be provided at a position in the process line where a high-moisture slurry is present, e.g. before a centrifugation device. Alternatively, said by-pass valve may be provided at a position in the process line where a low-moisture slurry is present, e.g. directly before the spray-drying unit.

Preferably, said at least one device, preferably said process line, for preparing a slurry is located in the same facility as the extruder, preferably in the same factory hall. The lines for connecting said device and said extruder may then be accordingly short.

In another embodiment of the present invention, a storage unit may be provided into which said slurry can be inserted from said at least one device for preparing a slurry, preferably said process line. Said storage unit may be, for example, a buffer tank. Preferably, said storage unit is connected to said unit for inserting a slurry. Said connection may be releasable. This means that the storage unit may be alternately connected to said at least one device for preparing a slurry, preferably said process line, and to said unit for inserting a slurry. When a slurry has been prepared in said at least one device for preparing a slurry, preferably said process line, said slurry can be inserted into said storage unit, preferably via a by-pass valve discussed above. Then, the storage unit may be relocated, e.g. by shipment, and connected to said unit for inserting a slurry, in order to insert said slurry into said unit and subsequently into an extruder or pre-conditioner. Preferably, the distance required for relocation of the storage unit should be kept as small as possible.

The present invention is also related to an extruder comprising a vacuum filling system, preferably a vacuum filing system comprising a screw pump, characterized in that the vacuum filling system is connected to a first barrel housing of the extruder directly or via a pre-conditioner.

As explained above, such an extruder is particularly suitable for processing slurries, in particular low-moisture slurries. The vacuum filling system is connected to a first barrel housing of the extruder, i.e. to the first barrel housing at the beginning of the extruder screw shaft(s) when considering the direction of product flow.

The present invention is also related to a method of retrofitting a process line for preparing a dried protein powder, comprising the step of providing a by-pass valve before a spray-drying unit, either at a position in the process line where a high-moisture slurry is present, for example before a centrifugation device, or at a position in the process line where a low-moisture slurry is present, for example directly before the spray-drying unit.

The process line has been discussed above. With the retrofitting, a spray-drying unit present in the process line can be circumvented, and the process line can be used for preparing a slurry instead of a dried powder.

The present invention will now be explained in more detail by reference to non-limiting drawings and examples. It is shown:
- Fig. 1: an exemplary illustration of an embodiment of the system of the present invention.
- Fig. 2: an exemplary illustration of an embodiment of a process line for preparing a slurry in the system of the present invention.

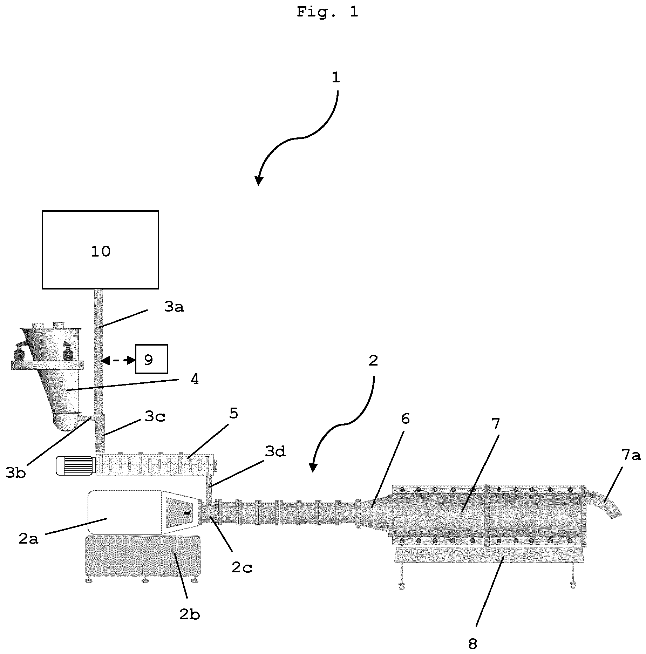

Fig. 1 shows an exemplary illustration of an embodiment of the system 1 of the present invention. A device for preparing a slurry 10, preferably a process line, is connected to an extruder 2 via a line 3a. A dosing unit 4, here exemplary a powder dosing unit, is connected via a line 3b to said extruder, wherein lines 3a and 3b are combined to form a line 3c that enters into a unit 5 for inserting a slurry into the extruder 3, for example here a screw pump. Said unit may be additionally provided with a flow-measuring system (not shown in Fig. 1).

Upstream of the point where line 3b enters from dosing unit 4, a monitoring unit 9 is provided, here an in-line monitoring unit such as a NIR monitoring unit, is provided for analysing the slurry coming through line 3a. If it is determined that the composition of the slurry should be modified, the dosing unit 4 can release additional material (e.g. water or protein powder) through line 3b into the extruder 2.

The extruder 2 comprises a motor 2b for operating at least one screw (not shown). The motor 2a is provided on a support 2b. The extruder 2 furthermore comprises barrel housings 2c in which at least one screw (not shown) is provided. In the embodiment of Fig. 1, the extruder 2 comprises 8 barrel housings 2c. As discussed above, however, it possible to reduce the number of barrel housings by 1 to 4 barrel housings, since the slurry enters the extruder typically in an already heated state, so that less heating has to be performed in the extruder 2.

The line 3c enters into the first barrel housing 2c. Alternatively (not shown in Fig. 1), the slurry may first enter into a preconditioner, to be preconditioned therein, and only then transferred from said preconditioner into the first barrel housing 2c of the extruder 2.

In the embodiment shown in Fig. 1, the slurry is processed in the extruder 2, and subsequently is transferred through a distributor unit 6 into a cooling die 7, where the extruded slurry is cooled to a desired temperature. Such a cooling die is described, for example, in EP-3 524 059 A1. The cooling die 7 is here provided on a cooling die support 8, which in this embodiment is designed as movable carrier for transporting the cooling die 7 to a remote location for e.g. maintenance or cleaning. Such a movable carrier is described, for example, in WO 2020/249658 A1.

Finally, the cooled slurry extrudate is released through an outlet 7a of the cooling die 7, and can be further process (e.g. shaped in a mold) in a conventionally known manner.

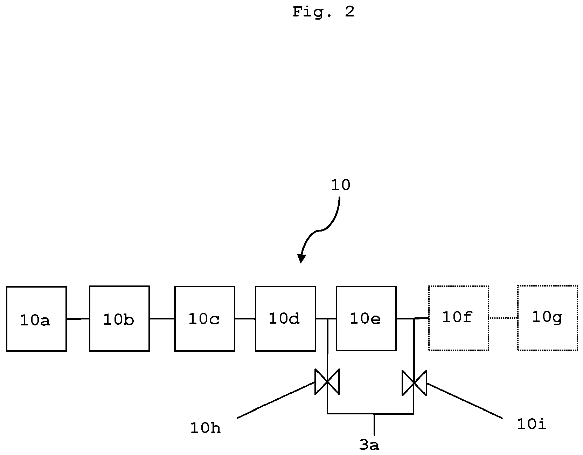

Fig. 2 shows an exemplary illustration of an embodiment of a device for preparing a slurry 10 in the form of a process line in the system 1 of the present invention. The process line in Fig. 2 is an example designed for the preparation of a slurry from plant material, for example peas.

The process line in the embodiment of Fig. 2 comprises a storage unit 10a, in which the raw material, for example peas, are stored and can be transferred to a dehulling unit 10b. In the dehulling unit 10b, the material is dehulled and optionally milled. The material is then transferred to a decanting unit 10c for a purification of the material from unsuitable material parts. The material is then transferred to a heating unit 10d for typically gentle heating.

After the heating unit 10d, a high-moisture slurry is present in the process line. Through a by-pass valve 10h, the high-moisture slurry may be led to line 3a which leads to the extruder 2.

Alternatively, the high-moisture slurry may be led into a centrifugation unit 10e (or other drying unit), where a substantial amount of moisture is removed from the slurry. Accordingly, after the unit 10e, a low-moisture slurry is present in the process line. Through a by-pass valve 10i, the low-moisture slurry may be led to line 3a which leads to the extruder 2.

For illustration purposes, in Fig. 2 a subsequent spray-drying unit 10f and packaging unit 10 g are indicated in dotted lines, illustrating the location where in a conventional process line those units would be present. According to the present invention, it is not necessary to provide those units in the process line.

## Claims

1. A process for producing a protein-containing product, comprising the steps
a) preparing a slurry comprising a protein from a protein source, wherein said slurry preparation does not involve a spray-drying step,
b) inserting said slurry from step a) into an extruder (2), or into a pre-conditioner from which the slurry is transferred into an extruder (2),
c) performing an extrusion process so as to obtain said protein-containing product.

2. Process according to claim 1, **characterized in that** said slurry obtained in step a) has a moisture content in the range from 30-90 wt.-%, preferably 40-70 wt.-%, especially preferred 50-60 wt.-%, based on the entire weight of the slurry.

3. Process according to claim 1, **characterized in that** said slurry obtained in step a) has a moisture content in the range from 5-30 wt.-%, preferably 10-25 wt.-%, especially preferred 10-20 wt.-%, based on the entire weight of the slurry.

4. Process according to any of claims 1 to 3, **characterized in that** a monitoring step, preferably an in-line monitoring step, of the slurry is performed before the slurry is inserted into the extruder.

5. Process according to claim 4, **characterized in that**, before insertion into the extruder, the slurry is modified by adding water and/or solid protein material in accordance with the result of the monitoring step.

6. Process according to any of claims 1 to 5, **characterized in that** the protein is a plant protein, preferably selected from the group consisting of soy protein and pulse protein such as pea protein.

7. System (1) for producing a protein-containing product, comprising
- at least one device (10), preferably a process line, for preparing a slurry comprising a protein from a protein source,
- an extruder (2),
- a unit (5) for inserting a slurry into the extruder (2) or into a pre-conditioner, **characterized in that** said unit (5) is connected at one end, to said at least one device (10) for preparing a slurry comprising a protein from a protein source, preferably via a by-pass valve (10 h, 10i), or to a storage unit into which said slurry can be inserted from said at least one device for preparing a slurry, and on the other end to said extruder (2) or pre-conditioner.

8. System according to claim 7, **characterized in that** said unit (5) for inserting a slurry into the extruder (2) is a vacuum filling system, preferably a vacuum filing system comprising a screw pump.

9. System according to any of claims 7 and 8, **characterized in that** the extruder (2) comprises 4-5 barrel housings (2c).

10. System according to any of claims 7 to 9, **characterized in that** the system (1) comprises a dosing unit (4) for adding liquid, preferably water, and/or solid material, preferably protein material, to the slurry.

11. System according to claim 10, **characterized in that** the unit (5) for inserting a slurry into the extruder (2) comprises a flow-measuring and control system, preferably selected from the group consisting of a flow meter and a loss-in-weight feeder.

12. System according to any of claims 7 to 11, **characterized in that** the system furthermore comprises a monitoring unit (9), preferably a NIR monitoring unit.

13. System according to any of claims 7 to 12, **characterized in that** said at least one device (10), preferably said process line, for preparing a slurry is located in the same facility as the extruder (2).

14. A method of retrofitting a process line (10) for preparing a dried protein powder, comprising the step of providing a by-pass valve (10h, 10i) before a spray-drying unit (10f), either at a position in the process line (10) where a high-moisture slurry is present, for example before a centrifugation device (10e), or at a position in the process line (10) where a low-moisture slurry is present, for example directly before the spray-drying unit (10f).

15. Extruder (2), comprising a vacuum filling system (5), preferably a vacuum filing system comprising a screw pump, **characterized in that** the vacuum filling system (5) is connected to a first barrel housing (2c) of the extruder (2), either directly or via a pre-conditioner.
